(19) Europäisches Patentamt
European Patent Office
Office européen des brevets

(11) **EP 1 118 508 B1**

(12) **EUROPÄISCHE PATENTSCHRIFT**

(45) Veröffentlichungstag und Bekanntmachung des Hinweises auf die Patenterteilung:
**23.03.2005 Patentblatt 2005/12**

(51) Int Cl.7: **B60R 21/01**, G01P 15/00

(21) Anmeldenummer: **01100562.6**

(22) Anmeldetag: **10.01.2001**

(54) **Verfahren zum Betreiben einer Sensorbaugruppe mit richtungsempfindlichen Sensoren sowie entsprechende Beschleunigungsaufnehmerbaugruppe**

Method to control an arrangement with directional sensitive sensors and corresponding acceleration sensor module

Méthode de contrôle d'un reseau de capteurs de direction et des capteurs d'accélération correspondant

(84) Benannte Vertragsstaaten:
**DE ES FR GB IT SE**

(30) Priorität: **21.01.2000 DE 10002471**

(43) Veröffentlichungstag der Anmeldung:
**25.07.2001 Patentblatt 2001/30**

(73) Patentinhaber: **Conti Temic microelectronic GmbH**
**90411 Nürnberg (DE)**

(72) Erfinder:
• **Baur, Richard**
**85276 Pfaffenhofen (DE)**
• **Held, Christian**
**86529 Schrobenhausen (DE)**
• **Küblbeck, Hermann**
**86529 Schrobenhausen (DE)**
• **Steurer, Helmut**
**85302 Gerolsbach-Junkenhofen (DE)**
• **Wöhrl, Alfons**
**86529 Schrobenhausen (DE)**

(56) Entgegenhaltungen:
**DE-C- 19 715 575**

EP 1 118 508 B1

**Beschreibung**

Die Erfindung betrifft ein Verfahren zum Betreiben einer Sensorbaugruppe mit richtungsempfindlichen Sensoren gemäß Anspruch 1 und eine entsprechende Beschleunigungsaufnehmerbaugruppe gemäß Anspruch 3.

Ein ähnliches Verfahren zum Betreiben einer Sensorbaugruppe mit richtungsempfindlichen Sensoren sowie entsprechende Beschleunigungsaufnehmerbaugruppe sind der gattungsbildenden DE 197 15 575 C1 anhand einer richtungsselektiven Auslösung einer passiven Sicherheitseinrichtung zu entnehmen. Diese Patentschrift beschreibt bereits die Probleme mit der Richtungsempfindlichkeit bei der Montage von Sensorbaugruppen mit richtungsempfindlichen Sensoren anhand der Beschleunigungsaufnehmer. So ist die Richtungsempfindlichkeit beschleunigungsempfindlicher Elemente, beispielsweise piezoelektrischer Sensoren, theoretisch recht gut. Die Unsicherheit im Meßergebnis kommt hingegen im allgemeinen von den Ungenauigkeiten bei der Montage der beschleunigungsempfindlichen Elemente im Gehäuse des Beschleunigungsaufnehmers, des Beschleunigungsaufnehmers auf der Platine, der Platine im Gehäuse und des fertigen Geräts im Fahrzeug. Fehler bei der Messung kommen dabei weniger durch eine Verfälschung eines Signals zustande, das in Richtung der maximalen Empfindlichkeit der Beschleunigungsaufnehmer wirkt, vielmehr werden diejenigen Signalanteile am stärksten verfälscht, die senkrecht daran anliegen. Diese Größe wird in den Datenblättern meist als Querempfindlichkeit bezeichnet, bedeutet aber in fast allen Fällen nichts anderes als den Winkel, mit dem das beschleunigungsempfindliche Element gegenüber der SOLL-Ausrichtung seiner gerichteten Empfindlichkeitsachse verdreht eingebaut sein kann.

Die Herstellung von Beschleunigungsaufnehmern mit ausreichend geringer Winkeltoleranz sowie eine entsprechend genaue Montage im Gerät und im Fahrzeug hat einen ganz erheblichen Aufwand zur Folge. Daher sind die bekannten Vorrichtungen entweder in Ihren Herstellung teuer, weil Bauteile mit besonders genauer Winkelempfindlichkeit verwendet werden müssen oder ihr Einbau ist aufwendig und damit wiederum teuer, weil bei der Verwendung von weniger genauen Bauteilen ein sehr genauer Abgleich der Empfindlichkeit und eine Kompensation der Winkeltoleranz nach dem Einbau vorgenommen werden müssen.

Derartige Verfahren und Vorrichtungen sind beispielsweise aus DE 37 17 427, DE 37 33 837 C2 oder DE 41 16 336 C1 bekannt. Aus der WO 94/12886 ist darüber hinaus ein monokristalliner Beschleunigungssensor zu entnehmen, bei dem die auslenkbare Masse aufgrund der definierten Ausrichtung der Kristalle einen theoretisch bekannten Winkel zu den gewünschten Hauptempfindlichkeitsachsen aufweist. Die auf die auslenkbare Masse wirkenden und an insgesamt vier Aufnehmern erfaßten Kräfte werden entsprechend ihrer Bestandteile in die Hauptempfindlichkeitsrichtungen zerlegt und so der Auswertung zur Verfügung gestellt. Ein Abweichen der tatsächliche Ist-Ausrichtungen der Empfindlichkeitsachsen von vorgegebenen Soll-Ausrichtungen aufgrund von Einbauabweichungen wird nicht betrachtet.

Die oben genannte DE 197 15 575 C1 schlägt hingegen zum Ausgleich von Winkeltoleranzen eine Winkelkorrektur der von den Beschleunigungsaufnehmern erzeugten Signale durch eine Linearkombination mit einstellbaren Faktorenvor, wobei auch ein Verfahren zur Bestimmung der Faktoren $\{c_{ij}\}$ vorgeschlagen wird, indem sequentiell n bekannte Beschleunigungssignale in n verschiedenen Richtungen in die n Beschleunigungsaufnehmer eingeprägt und die daraus resultierenden n x n Ausgangssignale a(I)1, a(I)2, ... a(I)n; a(II)1, a(II) 2, ... a(II)n; ...; a(n)1, a(n)2, ... a(n)n gemessen und die Faktoren cij aus den gemessenen Ausgangssignalen gemäß

$$\{cij\} = \{Rij\} * \begin{bmatrix} a(I)_1 & .... & a(I)_n \\ : & : & : \\ a(n)_1 & ... & a(n)n \end{bmatrix}^{-1}$$

bestimmt werden, wobei {cij} eine aus den Faktoren cij aufgebaute n x n-Matrix und eine Korrekturmatrix {Rij} die vorgegebenen theoretischen, bei den bekannten Beschleunigungssignalen ideal zu erwartenden Werte sind. Liegen orthogonale Beschleunigungssignale gleicher Amplitude vor, vereinfacht sich {Rij} zur Einheitsmatrix {E}.

Die Baugruppe nach ihrem Einbau in ihrem Fahrzeug zu testen, indem das ganze Fahrzeug den vorgegebenen Beschleunigungssignalen ausgesetzt wird, ist unpraktikabel und durch die Federung des Fahrzeugs stark verfälscht.

Durch das Testen allein der Baugruppe werden jedoch Abweichungen beim Einbau in das Fahrzeug nicht erfaßt. Aus diesem Grund wird in der nicht vorveröffentlichten DE 19939984 der Anmelderin ein Verfahren zur richtungsselektiven Auslösung durch Erfassung der IST-Ausrichtung durch eine Lageerfassungseinheit anhand von Bezugsmarkierungen vorgestellt, die entweder fest an dem Beschleunigungssensor angebracht sind oder die erst nach dem Feststellen der tatsächlichen IST-Ausrichtung aufgebracht, nachfolgende Montageabweichungen aber anhand dieser Bezugsmarkierung dann erkannt und jeweils die Faktoren angepaßt werden.

Aus der DE 42 28 414 A1 ist darüber hinaus ein Verfahren sowie eine Vorrichtung zur Aufbereitung von Sensorsignalen für ein Fahrwerksregelungs- und/oder Steuersystem zu entnehmen, bei dem die Fahrzeugbewegungen bezüglich eines inertialen Bezugssystems erfasst und nachfolgend in ein fahrbahnfestes Bezugssystem umgerechnet, um so die Einflüsse einer Fahrbahnneigung, insbesondere Zentrifugalkrafteinwirkungen in den gemessenen Größen zu eliminieren. Aus der DE 39 24 691 C2 ist eine Korrektur von Beschleunigungssensorsignalen hinsichtlich der Einflüsse von Beschleunigungskräften in eine von der Hauptachse des jeweiligen Beschleunigungssensors abweichenden Richtung zu entnehmen, bei der die Korrektur auf einer Erkennung des tatsächlichen Fahrzeugzustands, insbesondere eines in die Hauptachse beschleunigungsfreien Zustands beruht, so dass aus dem dennoch auftretenden Beschleunigungssignal durch gleitende Mittelwertbildung der Fehleranteil bestimmt und nachfolgend zur Korrektur abgezogen wird. Die Verfahren der DE 42 28 414 A1 als auch der DE 39 24 691 C2 basieren auf zusätzlichen Sensorsignalen bzw. Erkenntnissen, die nicht immer oder nur mit erheblichem Aufwand zur Verfügung zu stellen sind.

Aufgabe der Erfindung ist es, ein Verfahren zum Betreiben einer Sensorbaugruppe mit n richtungsempfindlichen Sensoren anzugeben, bei der die Einsatzmöglichkeiten bei gleicher Meßgenauigkeit weiter verbessert werden. Diese Aufgabe wird gelöst durch die Merkmale des Patentanspruchs 1. Zudem wird in Patentanspruch 3 eine entsprechende Beschleunigungsaufnehmerbaugruppe vorgestellt. Vorteilhafte Weiterbildungen sind jeweils den Unteransprüchen zu entnehmen.

So wird ein Verfahren zum Betreiben einer Sensorbaugruppe mit n richtungs-empfindlichen Sensoren vorgestellt, wobei die Sensoren bezüglich der Baugruppe in n unterschiedliche Richtungen ausgerichtet sind und jeweils ein Sensorsignal erzeugen. Eine Signalaufbereitungseinrichtung wandelt diese n Sensorsignale mittels einer Recheneinheit in n Ausgangssignale um, wobei die Ausgangssignale Linearkombinationen der Sensorsignale mit in einer Speichereinheit abgelegten und mittels einer Programmiereinheit frei programmierbaren Faktoren darstellen.

Indem die Faktoren von einer externen Programmiereinheit aus frei programmierbar sind, wird es möglich, nicht nur eine fertigungstechnisch entstandene Winkeltoleranz auszugleichen, sondern als Ausgangssignale gezielt abweichende und frei wählbare Linearkombinationen der Sensorsignale zur Verfügung zu stellen.

Die freie Programmierung der Faktoren $(c_{ij})$ und die daraus jeweils entstehende Linearkombination der Sensorsignale erlaubt es, weitgehend unabhängig von der konkreten Ausrichtung der Hauptempfindlichkeitsachsen der Sensoraufnehmer die Baugruppe im Fahrzeug zu montieren und für die Auswertung nahezu jede gewünschte Zusammensetzung der Ausgangssignale bereitzustellen, insbesondere auch von einer für die Baugruppe ursprünglich geplanten Ausrichtung wieder abzuweichen. Die Faktoren werden jeweils entsprechend dieser Anforderungen programmiert. Gründe für solche Abweichungen kann im Extremfall die Verwendung der Baugruppe für andere Meßaufgaben sein, bspw. der Wechsel vom Frontalcrashbereich in die Seitencrashmessung, oder die Verwendung in anderen Fahrzeugen, die aufgrund ihrer baulichen Besonderheiten abweichende Sensorverläufe aufweisen und diese durch neue, auf den Anwendungsfall optimierte Faktoren berücksichtigt werden. Die nachträglich über die Programmierbarkeit mögliche Neuausrichtung kann erforderlich sein durch eine Abweichung der Einbaurichtung der Baugruppe bei gleichbleibender Auswerterichtung oder durch eine neu gewünschte Auswerterichtung bei gleichbleibender Einbaurichtung oder grundsätzlich auch eine Kombination beider Fälle. Eine neue Einbaurichtung entspricht dabei einer neuen IST-Ausrichtung, eine neue Auswerterichtung einer neuen SOLL-Ausrichtung.

Erfindungsgemäß erfolgt eine Kaskadierung, also eine Verwendung der an sich aus der DE 197 15 575 C1 bekannten Korrektur fertigungsbedingter Winkeltoleranzen mit einer weiteren Korrektur bzw. Neuausrichtung durch die Programmierung. Dabei werden entweder die zuvor ermittelten, einstellbaren Faktoren geändert oder neben den ersten Faktoren zweite, frei programmierbare Faktoren vorgesehen und die von den Beschleunigungsaufnehmern ankommenden Signale unter Multiplikation mit beiden Faktoren umgewandelt.

Für die Erkennung fertigungsbedingter Winkeltoleranzen steht neben dem aus der oben genannten DE 197 15 575 C1 bekannten Verfahren, bei dem bekannte Beschleunigungssignale in bekannter Ausrichtung eingeprägt und die von den Beschleunigungsaufnehmern ankommenden Signale ausgewertet werden, auch ein auf Basis von Bezugsmarkierungen und einer Lageerfassungseinheit arbeitendes Verfahren gemäß der oben genannten DE 199 39 984 zur Verfügung, in welchem anhand der Bezugsmarkierungen weitere Winkelabweichungen erkannt und in der Richtungskorrektur berücksichtigt werden.

Daran kann sich weiterhin eine erneute Programmierung der Faktoren bzw. Programmierung weiterer Faktoren anschließen, sei es zur Feinabstimmung des Auslöseverhaltens oder wegen einer Verwendung in einem anderen Fahrzeugtyp oder einer anderen Einbaulage bzw. wegen der Verwendung für andere Meßaufgaben, wie bereits beschrieben. Auch geänderte technische Anforderungen an die Meß- und Auslöseempfindlichkeit oder an die Zusammensetzung der Linearkombination können später noch angepaßt werden, notfalls im Rahmen eines Werkstattaufenthalts. Die Verfahren werden bevorzugt nacheinander eingesetzt.

Es ist also zunächst zu unterscheiden zwischen

   a) einer vorgegebenen Soll-Ausrichtung, in der die Empfindlichkeitsachsen der Beschleunigungsaufnehmer innerhalb der Baugruppe ausgerichtet sein sollen,

b) der Ist-Ausrichtung, welche die Beschleunigungsaufnehmer innerhalb der Baugruppe tatsächlich aufweisen und

c) einer nachträglich über die Programmierbarkeit möglichen Neuausrichtung, die

c1) durch eine Abweichung der Einbaurichtung der Baugruppe bei gleichbleibender Auswerterichtung oder

c2) durch eine neue gewünschte Auswerterichtung bei gleichbleibender Einbaurichtung bedingt: ist.

Hintergrund ist die hohe Fertigungstiefe in der Industrie heutzutage. Betrachtet man die Spezialisierung der an einer Sicherheitseinrichaung für ein Fahrzeug beteiligten Unternehmen, so wird deutlich, daß zwischen dem Hersteller der einzelnen Beschleunigungsaufnehmer, dem Hersteller der Baugruppe, dem Systemlieferanten der Sicherheitseinrichtung und dem Fahrzeughersteller unterschieden werden muß. In jeder Fertigungsstufe soll eine Optimierung und Vereinfachung der Produktion, insbesondere eine vielseitige Einsetzbarkeit der Komponenten erzielt werden.

Das vorgestellte Verfahren ermöglicht nunmehr eine individuelle Anpassung der Linearkombination der Ausgangssignale selbst in einer späteren Fertigungsstufe oder gar bereits nach Auslieferung. So wird durch die in die Sensorbaugruppe integrierte Signalaufbereitungseinrichtung mit einer Rechen- und einer Speichereinheit eine universelle Einsetzbarkeit dieser Baugruppe erreicht.

Durch die freie Programmierbarkeit der Faktoren von der externen Programmiereinheit aus können beispielsweise die Beschleunigungsaufnehmer, die Baugruppen und sogar die gesamte Sicherheitseinrichtung möglichst einheitlich produziert, für den jeweiligen Anwendungsfall jedoch optimiert programmiert werden. Jederzeit, also bspw. auch nach dem Einbau in ein Fahrzeug, kann die Stärke der ankommenden Signale der Beschleunigungsaufnehmer verändert, eine beliebige Linearkombination bereitgestellt und so besonders aussagekräftige Ausgangssignale für die Auswertung hinsichtlich der Auslösung von Insassenschutzeinrichtungen bereitgestellt werden. Selbstverständlich ist die Programmierung der Faktoren vorzugsweise gegen unerlaubte Eingriffe geschützt.

Besonders bevorzugt ist die Anwendung des Verfahrens in einer Beschleunigungsaufnehmerbaugruppe zur richtungsselektiven Auslösung einer passiven Sicherheitseinrichtung in einem Fahrzeug im Falle eines Aufpralls, wobei die Signalaufbereitungseinrichtung die Ausgangssignale zur Auslösung der passiven Sicherheitseinrichtung bereitstellt, wobei die Verwendung für andere Sensorbaugruppen richtungsempfindlicher Sensoren ebenfalls ohne weiteres denkbar ist.

Die bauliche Integration dieser Signalaufbereitungseinrichtung mit der Richtungskorrektur in die Beschleunigungsaufnehmerbaugruppe ermöglicht es dem Hersteller dieser Baugruppe, allen Kunden eine einheitliche Baugruppe zur Verfügung zu stellen, welche die Kunden individuell anpassen können. Insbesondere können damit die gleichen Beschleunigungsaufnehmerbaugruppen sowohl für Anwendungen im Insassenschutzbereich Verwendung finden, als auch für andere Beschleunigungsmeßaufgaben, bspw. ESP und ABS im Fahrzeugbereich oder der Steuerung von Flugobjekten und ähnlichem.

Die Erfindung soll nachfolgend anhand von Ausführungsbeispielen und Figuren näher erläutert werden. Kurze Beschreibung der Figuren:

Figur 1   Baugruppe mit Beschleunigungsaufnehmern einer Sicherheitseinrichtung in einem Kraftfahrzeug, wobei eine Signalaufbereitungseinrichtung über einen Kontakt mit einer Programmiereinheit zur Programmierung der Korrekturfaktoren verbunden ist

Figur 2   Verdeutlichung der verschiedenen Varianten einer Neuausrichtung und einer erforderlichen Anpassung der Richtungskorrekturfaktoren

Figur 3   Änderung bzw. Ergänzung der Faktoren in den einzelnen Fertiguilgsstufen

Die Ausführungsbeispiele betreffen die bevorzugte Anwendung des Verfahrens für eine Sensorbaugruppe mit Beschleunigungsaufnehmern als richtungsempfindliche Sensoren im Bereich des Insassenschutzes, wobei das Verfahren ohne weiteres auch auf andere richtungsempfindliche Sensoren übertragen werden kann.

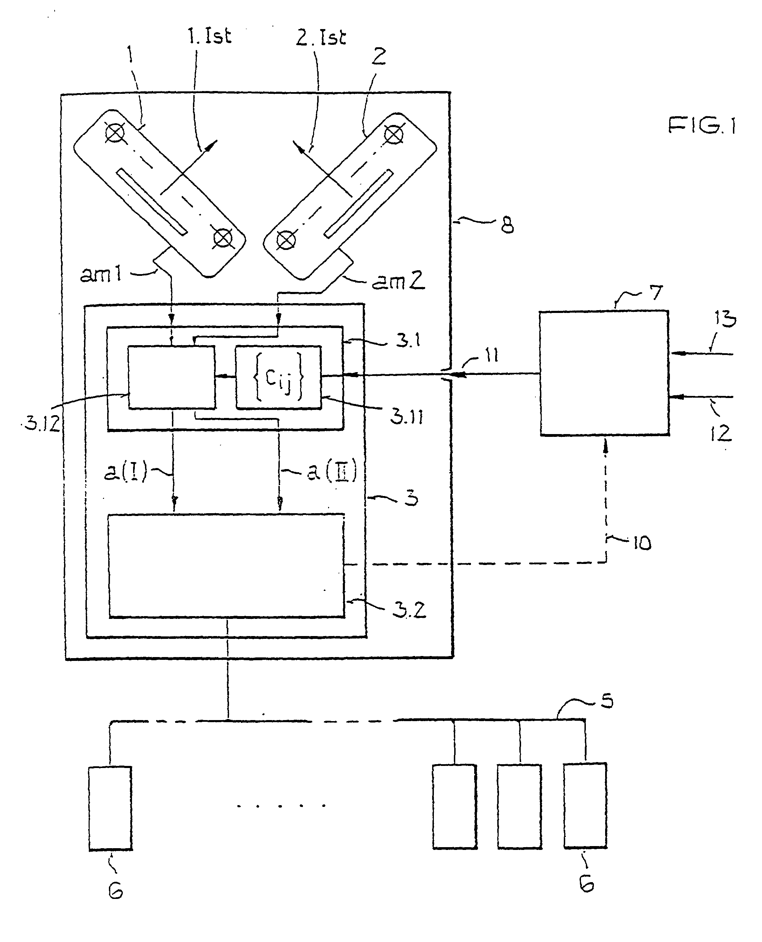

Die Figur 1 zeigt eine Baugruppe 8 mit zwei Beschleunigungsaufnehmem 1,2 einer Sicherheitseinrichtung in einem Kraftfahrzeug, wobei eine derartige Beschleunigungsaufnehmerbaugruppe auch für andere, bspw. rein meßtechnische Aufgaben genutzt werden kann. Die Sicherheitseinrichtung besteht zudem aus einer Reihe von Insassenschutzeinrichtungen 6, insbesondere Airbags, Gurtstraffern und anderen Rückhalteeinrichtungen, die in diesem Beispiel über eine Busleitung 5 mit der Baugruppe 8 verbunden sind und über die Busleitung 5 Daten austauschen und erforderlichenfalls auch Versorgungsenergie erhalten.

In die Baugruppe 8 ist eine Signalaufbereitungseinrichtung 3 integriert, die die Beschleunigungssignale am1, am2 der Beschleunigungsaufnehmer 1,2 empfängt und anhand der Richtungskorrekturfaktoren, skizziert als Matrix {cij}, in Ausgangssignale a(I), a(II) umwandelt. Die Signalaufbereitungseinrichtung 3 kann aus diesen Ausgangssignalen a(I), a(II) erforderlichenfalls unmittelbar selbst über eine nachgeordnete Einheit 3.2 den eigentlichen Auslösebefehl erzeugen oder dies einer dezentral verteilte Logik überlassen, die bspw. in den einzelnen Insassenschutzeinrichtungen 6 oder in einer in diesem Ausführungsbeispiel nicht vorgesehenen zentralen Auswerteeinheit angeordnet sein könnte.

Die Beschleunigungsaufnehmer 1,2 können piezoelektrische Sensoren sein oder natürlich auch auf anderen die Beschleunigung messenden physikalischen Effekten basieren.

Die Aufnehmer 1,2 können als separate Bauelemente oder in ein Aufnehmersystem integriert sein, bspw. mit einem gemeinsamen in mehrere Richtungen auslenkbaren Massekörper und den Richtungen entsprechenden Aufnehmern.

Auch eine Anwendung auf Drehratensensoren, also Winkelbeschleunigungen, zur Erfassung von Fliehkräften oder eines Fahrzeugüberschlags ist denkbar. Die Signalaufbereitungseinrichtung wird auch dann anhand entsprechender Faktoren aus den Sensorsignalen die Linearkombinationen bereitstellen.

Von grundlegender Bedeutung ist jedoch die freie Programmierbarkeit dieser Faktoren{cij}, indem die Signalaufbereitungseinrichtung 3 über einen Kontakt 11 mit einer externen, baulich davon getrennten und über den Kontakt 11 anschließbaren Programmiereinheit 7 zur Programmierung der Korrekturfaktoren verbunden ist. Der Kontakt 11 erfolgt vorzugsweise über einen speziellen Stecker, der eine Verwechslung mit anderen und eine versehentliche oder mutwillige Umprogrammierung durch Nichtautorisierte ausschließt. Zusätzlich ist die Programmierung vorzugsweise durch ein codiertes Protokoll zwischen der Signalaufbereitungseinrichtung 3 und der Programmiereinheit 7 geschützt.

Der innere Aufbau der Signalaufbereitungseinrichtung 3 ist dabei entsprechend der Möglichkeiten der einzelnen Baugruppenhersteller anpassbar, weist vorzugsweise jedoch eine Recheneinheit 3.12, bspw. einen Mikroprozessor, und eine Speichereinheit 3.11 auf. Die Beschleunigungssignale (am1,am2) werden A/D-gewandelt dem Mikroprozessor zugeführt, der entsprechend digitale Ausgangssignale a(I),a(II) erzeugt.

Die Speichereinheit 3.11 enthält die digitalen Werte der Faktoren{cij} und ist über den Kontakt 11 frei programmierbar. Neben fertigungstechnischen Toleranzen ist auch eine Neuausrichtung der Empfindlichkeit der Sensorbaugruppe möglich, da die frei programmierbare Speichereinheit auch eine Umprogrammierung durch entsprechend Autorisierte zuläßt. Dabei ist jedoch unerheblich, ob für die nachfolgend näher beschriebene Kaskadierung der einzelnen auf die Faktoren zugreifenden Verfahren jeweils getrennte Speicherplätze vorgesehen sind und die Matrizen der Faktoren der einzelnen Fertigungsabschnitte in der Signalaufbereitungseinrichtung 3 miteinander verknüpft, bspw. multipliziert werden, oder ob die Programmiereinheit 7 jeweils eine gezielte Änderung des einen Speicherinhalts unter Berücksichtigung des vorherigen Werts vornimmt.

In einem nicht dargestellten Ausführungsbeispiel besteht die Speichereinheit aus zwei Speicherbereichen, von denen ein Speicherbereich nichtflüchtig frei programmierbar ist und der andere Speicherbereich als eine oder mehrere EEPROM-Einheiten ausgeführt ist, die beim Sensorbaugruppenhersteller fertig programmiert werden, die fertigungstoleranzbedingten Korrekturfaktoren enthalten und nachfolgend nicht veränderbar sind.

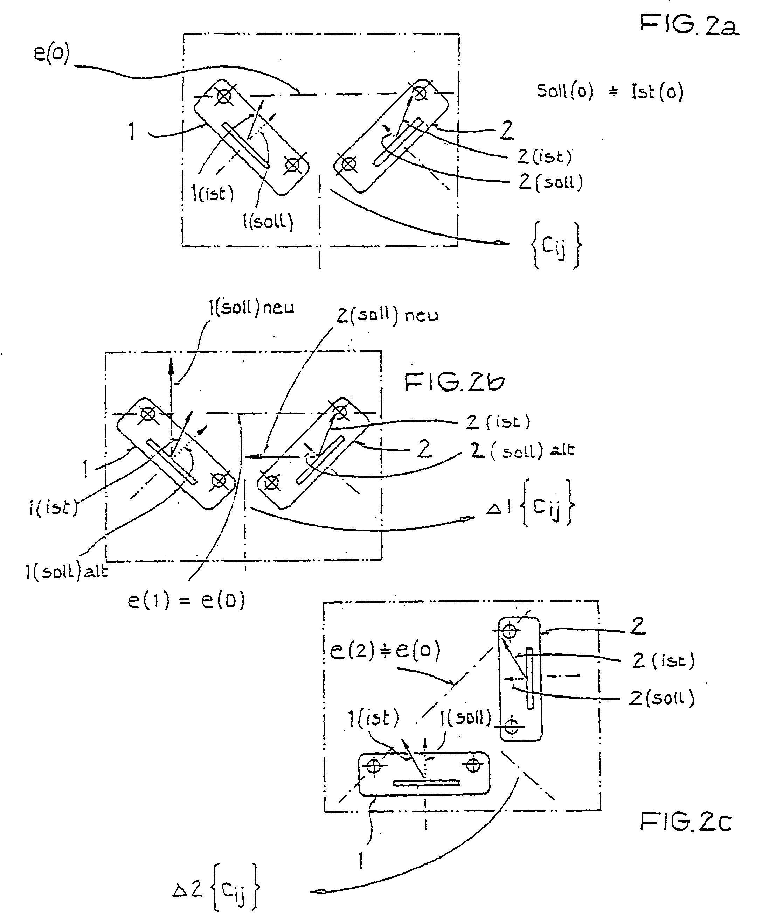

Die Figuren 2a-c verdeutlichen die zwei grundsätzlich verschiedenen Varianten einer Neuausrichtung und die daraus resultierend erforderliche Anpassung der Richtungskorrekturfaktoren. So zeigt Figur 2a zunächst zwei Beschleunigungsaufnehmer 1,2 mit einer ursprünglichen SOLL-Ausrichtung 1,2(SOLL) und einer dementsprechenden Einbaulage e(0). Bspw. durch Fertigungstoleranzen oder eine Inkonformität des Piezomaterials des Beschleunigungsaufnehmers 1 oder 2 weisen diese eine von der SOLL-Ausrichtung 1 (SOLL), 2(Soll) leicht abweichende IST-Ausrichtung 1 (IST), 2(ist) auf. Diese kann für sich genommen noch durch die eingangs beschriebenen bekannten Verfahren durch die Faktoren {cij} korrigiert werden.

Wird jedoch beim Einbau der Baugruppe in das Fahrzeug bei gleicher Einbaulage e(1)=e(0) die SOLL-Ausrichtung 1(SOLL)neu, 2(Soll)neu der Beschleunigungsaufnehmer 1,2 geändert, wie in Figur 2b skizziert, oder bei gleichbleibender SOLL-Ausrichtung 1,2(SOLL) die Einbaulage von e(0) auf e(2) geändert, wie in Figur 2c skizziert, muß wegen dieser Neuausrichtungen eine Anpassung der Faktoren Δ1{cij}, Δ2{cij} erfolgen. Im letzteren Fall bleibt zwar die Ausrichtung der Sensoren innerhalb der Baugruppe gleich, jedoch ändert sich die Ausrichtung der Baugruppe als solche. Nur durch eine Umprogrammierung bzw. Programmierung weiterer Faktoren kann der Auswertung ein Signal zur Verfügung gestellt werden, welches diese Neuausrichtung berücksichtigt. Selbstverständlich kann eine Kombination der beiden in Figur 2b und Figur 2c dargestellten Fälle auftreten.

In jedem dieser Fälle bietet die freie Programmierbarkeit der Faktoren eine einfache Möglichkeit der Anpassung der Ausgangssignale a(I), a(II) ... an die Neuausrichtung, ohne daß eine vollständige Veränderung des Auslösealgorithmus erforderlich wäre, indem die Faktoren {cij} neu programmiert oder neben einer ersten Matrix {C1} von Faktoren weitere {C2},{C3} programmiert und in der Signalaufbereitungseinrichtung 3 zur Erzeugung der Ausgangssignale miteinander multipliziert werden. Hinzuweisen ist dabei auf die mathematische Nicht-Kommutativität der Matrizen {C3},{C2},{C1}.

Tritt beispielsweise auch nach Anlauf der Serienproduktion eine Änderung in den Anforderungen an das Auslöseverhalten auf, sei es durch andere technische Ansprüche oder Fehlern in Versuchsfahrzeugen, kann jederzeit die Empfindlichkeit der Faktoren und die Zusammensetzung der Linearkombinationen angepaßt werden. Entsprechend ist selbstverständlich auch eine Anpassung an einen anderen Fahrzeugtyp oder einen anderen Sensorhersteller möglich. Selbst nach der Auslieferung der Fahrzeuge könnte im Rahmen eines Rückrufs in die Werkstätten durch Neuprogrammierung ein sonst erforderlicher Austausch vermieden werden.

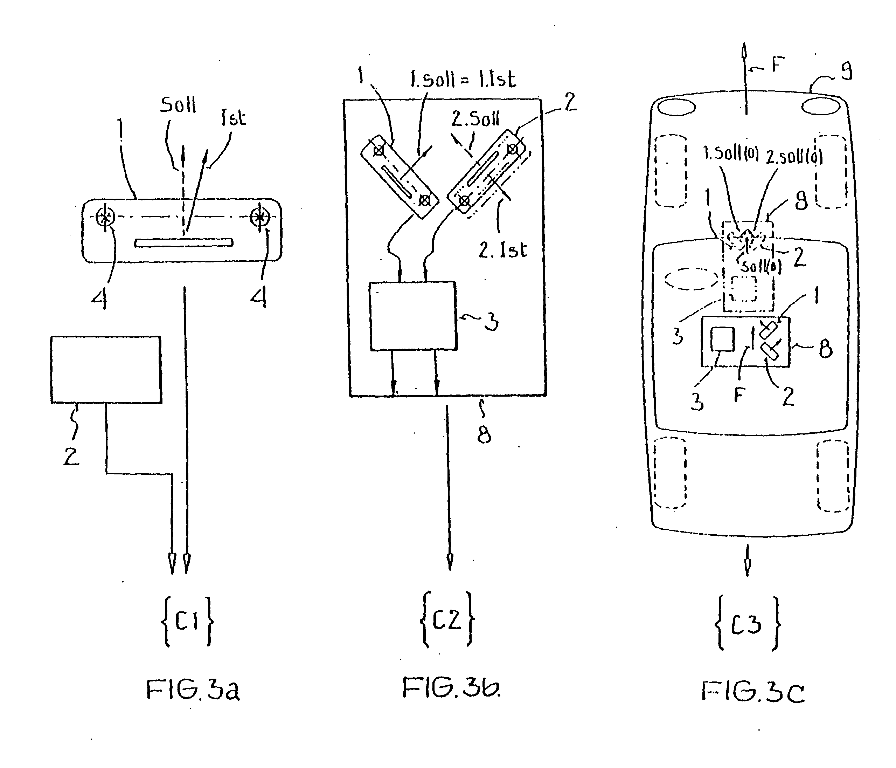

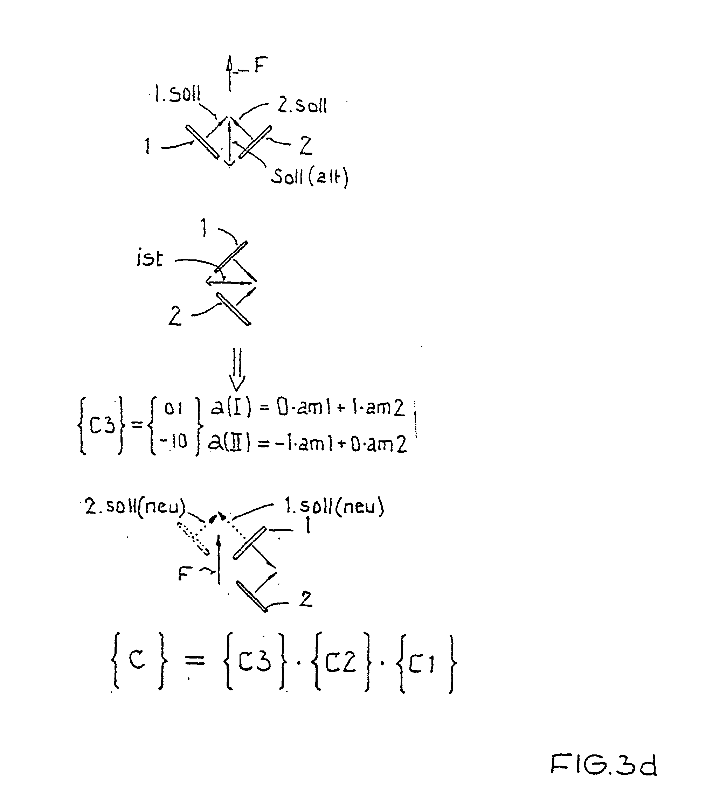

Die Figur 3a bis 3c verdeutlichen die bevorzugte Kaskadierung des Verfahrens der freien Programmierung der Faktoren mit aus dem Stand der Technik bekannten und eingangs beschriebenen Verfahren der Einprägung bekannter Testbeschleunigungssignale und der bezugsmarkierungsorientierten Lageerfassung.

So werden in einem ersten Fertigungsabschnitt beim Hersteller der Beschleunigungsaufnehmer die Beschleunigungsaufnehmer 1,2 in einer vorgegebenen Testeinbaulage unter Ausrichtung auf die von einer Lageerfassungseinheit erkennbare Bezugsmarkierungen 4 sequentiell einer Anzahl von bekannten Testbeschleunigungssignalen ausgesetzt. Der Beschleuniungsaufnehmer 2 ist dabei nur als Block angedeutet, für die Linearkombination mittels der Faktoren jedoch erforderlich. Aus den Testbeschleunigungssignalen resultierende Test - Ist - Ausgangssignale werden erfaßt, mit vorgegebenen theoretischen, bei den bekannten Testbeschleunigungssignalen ideal zu erwartenden Test - Soll - Ausgangssignalen verglichen und daraus erste, für die Testeinbaulage gültige Faktoren in einer Matrix {C1} eingestellt, die eine Winkelkorrektur zwischen SOLL-Ausrichtung , für Aufnehmer 1 bspw. 1.SOLL und tatsächlicher IST-Ausrichtung 1.IST des Beschleunigungsaufnehmers 1 ermöglichen. Betrachtet man in dieser Zusammenhang nochmals Fig. 1, so wird deutlich, daß diese Richtungskorrektur fertigungsbedingter Toleranzen auch besonders vorteilhaft unter Zuhilfenahme der Programmiereinheit 7 erfolgen kann, indem die Programmiereinheit 7 über einen Eingang 12 einerseits die Test - Soll - Ausgangssignale und über den Eingang 10 andererseits die Test - Ist - Ausgangssignale von der Recheneinheit 3.12 oder, wie in diesem Bsp., von der nachgeordneten Einheit 3.2 erhält.

Alternativ dazu kann auch eine Bezugsmarkierung auf den Sensoren oder der Baugruppe so aufgebracht werden, daß aus ihr die IST-Lage der Hauptempfindlichkeitsachse ableitbar ist.

Falls die bevorzugte vollständige bauliche Integration der Beschleunigungsaufnehmerbaugruppe nicht möglich ist, könnten in einem zweiten Fertigungsabschnitt in Fig. 3b mehrere Beschleunigungsaufnehmer 1,2 von einem Systemzulieferer auf einer Leiterplatte als Baugruppe 8 in verschiedenen Richtungen montiert werden. Die dabei auftretenden Montageabweichungen, hier im Extremfall beispielsweise ein um 180 Grad verdrehter Einbau des zweiten Beschleunigungsaufnehmers 2, werden anhand der Bezugsmarkierungen 4 erkannt und entsprechende zweite Faktoren als Matrix {C2} ermittelt.

Diese werden auch in vorteilhafter Weise über die Programmiereinheit 7 in die Speichereinheit 3.11 abgelegt, wobei die Programmiereinheit 7 entsprechende Signale über den Eingang 13 von einer nicht dargestellten Lageerfassungseinheit erhält.

Baut nun in einem dritten Fertigungsstufe ein Automobilhersteller in Fig. 3c die Baugruppe 8 nicht in der vom Systemzulieferer geplanten Ausrichtung ein, sei es beispielsweise durch Montagefehler oder geänderte Anforderungen an das Auslöseverhalten, das Raumangebot oder einfach in einem anderem Fahrzeugtyp, kann dies auch durch die freie Programmierung einer Matrix (C3) dritter Faktoren korrigiert werden.

So zeigt Figur 3c zunächst gestrichelt die ursprünglich geplante Ausrichtung der Hauptempfindlichkeit SOLL (0) längs zur Fahrrichtung F des Fahrzeugs 9 sowie den dann erfolgten Einbau um 90 Grad dazu versetzt. Bei nicht erfolgender Programmierung würde die Signalaufbereitungseinrichtung 3 einen Seitenaufprall als Frontalcrash werten und völlig falsche Insassenschutzeinrichtungen aktivieren. Durch die freie Programmierbarkeit der in diesem Beispiel dritten Faktoren{C3} kann jedoch eine Neuausrichtung erfolgen.

So wird das Beschleunigungssignal am1 des Sensors 1 gerade für das Ausgangssignal a(II) verwandt und am2 für a(I), wobei für am1 zusätzlich durch ein negatives Vorzeichen eine Drehung um 180 Grad bewirkt wird, so daß die dadurch virtuell entstehende neue SOLL-Ausrichtung SOLL(neu) wieder exakt in die Fahrtrichtung zeigt, also letztlich der alten SOLL-Ausrichtung SOLL(alt) entspricht, obwohl die IST-Ausrichtung gerade um 90 Grad verdreht dazu ist. Selbstverständlich ist auch dies nur ein besonders einfaches und anschauliches Beispiel und letztlich jede beliebige Linearkombination der Sensorsignale programmierbar.

Die skizzierten Faktoren in der Matrix {C3} bilden zusammen mit denen der ersten und zweiten Faktoren {C3} * {C2} * {C1} die Matrix {C} der endgültigen Faktoren, um so auch nach der Neuausrichtung durch die Programmierung noch die fertigungsbedingten Toleranzen der vorangegangenen Fertigungsstufen weiter zu berücksichtigen. Der besondere Vorteil dieser Kaskadierung liegt darin, daß die Abweichungen zwischen den einzelnen Fertigungsstufen immer wieder für den nachfolgenden Hersteller nachvollziehbar sind und ausgeglichen werden können. Hinzuweisen ist dabei auf die mathematische Nicht-Kommutativität der Matrizen {C3},{C2},{C1}.

**Patentansprüche**

1. Verfahren zum Betreiben einer Sensorbaugruppe (8) mit

    a) n richtungsempfindlichen Sensoren (1,2), wobei die Sensoren (1,2) bezüglich der Baugruppe (8) in n unterschiedliche Richtungen ausgerichtet sind und jeweils ein Sensorsignal (am 1, am 2) erzeugen,

b) indem eine Signalaufbereitungseinrichtung (3) diese n Sensorsignale (am 1, am 2) mittels einer Recheneinheit (3.12) in n Ausgangssignale (a(I), a(II), ... a(n)) umwandelt, wobei die Ausgangssignale (a(I), a(II)) Linearkombinationen der Sensorsignale (am 1, am 2) mit in einer Speichereinheit (3.11) abgelegten Faktoren (cij) gemäß

$$a(I) = c_{11} * am\ 1 + c_{12} * am\ 2 + ... + c_{1n} * am\ n$$

$$a(II) = c_{21} * am\ 1 + c_{22} * am\ 2 + ... + c_{2n} * am\ n$$

$$\vdots \qquad \vdots \qquad\qquad\qquad\qquad \vdots$$

$$a(n) = c_{n1} * am\ 1 + c_{n2} * am\ 2 + ... + c_{nn} * am\ n$$

darstellen

c) und die Faktoren $(c_{ij})$ in der Speichereinheit (3.11) mittels einer Programmiereinheit (7) programmiert werden,

d) wobei die Sensoren (1,2) in vorgegebene Soll-Ausrichtungen (1.SOLL, 2.SOLL) innerhalb der Baugruppe (8) ausgerichtet sind und tatsächliche Ist-Ausrichtungen (1.IST, 2.IST) eine fertigungsbedingte Winkeltoleranz dazu aufweisen,

e) die durch eine erste Matrix {C1} von Faktoren korrigiert wird, indem die Sensorsignale (am 1, am 2) anhand der ersten Matrix {C1} in n Ausgangssignale (a(I), a(II)) umgewandelt werden,
**dadurch gekennzeichnet daß**

f) darüber hinaus eine neue, von der Ausrichtung (SOLL(alt)) der Sensoren (1,2) in der Baugruppe (8) abweichende Neuausrichtung (SOLL(neu)) programmiert wird, indem durch die Programmiereinheit (7)

   f1) die erste Matrix {C1} geändert wird oder

   f2) neben der ersten Matrix {C1} eine weitere, frei programmierbare Matrix {C3} mit entsprechend der Neuausrichtung vorgesehen sind und die Sensorsignale (am 1, am 2) in n Ausgangssignale (a(I), a(ll)) unter Multiplikation mit den Matrizen umgewandelt werden.

**2.** Verfahren zur richtungsselektiven Auslösung einer passiven Sicherheitseinrichtung in einem Fahrzeug im Falle eines Aufpralls, **dadurch gekennzeichnet, dass** die Ausgangssignale gemäß einem Verfahren nach Anspruch 1 ermittelt werden und die Signalaufbereitungseinrichtung (3) die Ausgangssignale zur Auslösung der passiven Sicherheitseinrichtung bereitstellt.

**3.** Beschleunigungsaufnehmerbaugruppe

   a) bestehend aus n (n ≥ 2) jeweils in einem Winkel zueinander ausgerichteten Beschleunigungsaufnehmern (1, 2), die n Beschleunigungssignale (am 1, am 2) erzeugen und

   b) einer Signalaufbereitungseinrichtung (3), die diese n Beschleunigungssignale (am 1, am 2) in n Ausgangssignale (a(I), a(II), ... a(n)) umwandelt, wobei die Ausgangssignale (a(I), a(II)) Linearkombinationen der Beschleunigungssignale (am 1, am 2) mit einstellbaren Faktoren (cij) sind:

$$\text{(am 1, am 2) mit einstellbaren Faktoren (cij) sind:}$$

$$a(I) = c_{11} * am\ 1 + c_{12} * am\ 2 + ... + c_{1n} * am\ n$$

$$a(II) = c_{21} * am\ 1 + c_{22} * am\ 2 + ... + c_{2n} * am\ n$$

$$\vdots \qquad \vdots \qquad\qquad\qquad \vdots$$

$$a(n) = c_{n1} * am\ 1 + c_{n2} * am\ 2 + ... + c_{nn} * am\ n\ ,$$

c) wobei die Signalaufbereitungseinrichtung (3) in die Beschleunigungsaufnehmerbaugruppe (8) integriert ist, indem eine Recheneinheit (3.12) und eine Speichereinheit (3.11) vorgesehen ist,

d) wobei die Speichereinheit (3.11) die Faktoren ($c_{ij}$) enthält und von einer Programmiereinheit (7) aus frei programmierbar ist und

e) die Recheneinheit (3.12) die n Beschleunigungssignale (am 1, am 2) entsprechend der in der Speichereinheit (3.11) abgelegten Faktoren ($c_{ij}$) in n Ausgangssignale (a(I), a(II), ... a(n)) umwandelt

f) wobei die Beschleunigungsaufnehmer (1,2) in vorgegebene Soll-Ausrichtungen (1.SOLL, 2.SOLL) innerhalb der Baugruppe (8) ausgerichtet sind und tatsächliche Ist-Ausrichtungen (1.IST, 2.IST) eine fertigungsbedingte Winkeltoleranz dazu aufweisen,

g) die durch eine erste Matrix {C1} von Faktoren korrigiert wird, indem die Beschleunigungssignale (am 1, am 2) anhand der ersten Matrix {C1} in n Ausgangssignale (a(I), a(II)) umgewandelt werden,
**dadurch gekennzeichnet, daß**

h) die Speichereinheit (3.11) geeignet ist, neben der ersten Matrix {C1} eine weitere, durch die Programmiereinheit (7) frei programmierbare Matrix {C3} abzuspeichern, in welcher Faktoren entsprechend einer von der Ausrichtung (SOLL(alt)) der Beschleunigungsaufnehmer (1,2) in der Baugruppe (8) abweichenden Neuausrichtung (SOLL(neu)) gespeichert werden, und

i) die Recheneinheit (3.12) geeignet ist, die Beschleunigungssignale (am 1, am 2) unter Multiplikation mit den Matrizen in n Ausgangssignale (a(I), a(II)) umzuwandeln.

4. Vorrichtung nach Anspruch 3, **dadurch gekennzeichnet, daß** die Signalaufbereitungseinrichtung (3) besteht aus

   a) mindestens einen Analog-Digital-Wandler zur Digitalisierung der n Beschleunigungssignale (am 1, am 2),

   b) einer digitalen Speichereinheit (3.11), in der die Faktoren (cij) als digitalisierte Daten abgespeichert sind und die über eine Schnittstelle (11) mit der Programmiereinheit (7) verfügt und

   c) einen Mikroprozessor zur Umwandlung der digitalisierten Signale in die n digitale Ausgangssignale (a(I), a(II)).

5. Vorrichtung nach Anspruch 3, **dadurch gekennzeichnet, daß** die Speichereinheit (3.11) aus zwei Speicherbereichen besteht, von denen ein Speicherbereich nichtflüchtig frei programmierbar ist und der andere Speicherbereich als eine oder mehrere EEPROM - Einheiten ausgeführt ist.

**Claims**

1. A method of operating a sensor module (8) incorporating

   a) n directionally sensitive sensors (1, 2), wherein the sensors (1, 2) are aligned in n different directions with respect to the module (8) and produce a respective sensor signal (am 1, am 2),
   b) wherein a signal processing device (3) converts these n sensor signals (am 1, am 2) into n output signals (a(I), a (II), ... a(n)) by means of a computer unit (3.12), where the output signals (a(I), a(II)) represent linear combinations of the sensor signals (am 1, am 2) with factors (cij) stored in a memory unit (3.11) in accordance with

$$a(I) = c_{11} * am\ 1 + c_{12} * am\ 2 + ... + c_{1n} * am\ n$$
$$a(II) = c_{21} * am\ 1 + c_{22} * am\ 2 + ... + c_{2n} * am\ n$$
$$\vdots \qquad \vdots$$
$$a(n) = c_{n1} * am\ 1 + c_{n2} * am\ 2 + ... + c_{nn} * am\ n$$

c) and the factors (cij) are programmed into the memory unit (3.11) by means of a programming unit (7),

d) wherein the sensors (1, 2) are aligned in given preferred directions (1.Preferred, 2.Preferred) within the module (8) and specific actual alignments (1.Actual, 2.Actual) have a manufacturing-process-inherent angular tolerance with respect thereto

e) which is corrected by a first matrix {C1} of factors in that the sensor signals (am 1, am 2) are converted into n output signals (a(I), a(II)) with the aid of the first matrix {C1},

**characterized in that**

f) a new reorientation (Preferred(new)), which deviates from the alignment (Preferred(old)) of the sensors (1, 2) in the module (8), is additionally programmed with the aid of the programming unit (7) **in that**

> f1) the first matrix {C1} is altered or
>
> f2) there is provided in addition to the first matrix {C1}, a further freely programmable matrix {C3} corresponding to the reorientation and the sensor signals (am 1, am 2) are converted into n output signals (a(I), a(II)) by multiplication with the matrices.

2. A method for the directionally selective triggering of a passive safety device in a vehicle in the event of an impact, **characterized in that** the output signals are determined in accordance with a method according to Claim 1 and the signal processing device (3) makes the output signals available for the purposes of triggering the passive safety device.

3. An acceleration sensor module

a) consisting of n (n ≥ 2) acceleration sensors (1, 2) which are aligned at a respective angle to one another and produce n acceleration signals (am 1, am 2) and

b) a signal processing device (3) which converts these n acceleration signals (am 1, am 2) into n output signals (a(I), a(II) ... a(n)), where the output signals (a(I), a(II)) are linear combinations of the acceleration signals (am 1, am 2) with adjustable factors (cij):

$$a(I) = c_{11} * am\ 1 + c_{12} * am\ 2 + ... + c_{1n} * am\ n$$
$$a(II) = c_{21} * am\ 1 + c_{22} * am\ 2 + ... + c_{2n} * am\ n$$
$$\vdots \qquad \vdots$$
$$a(n) = c_{n1} * am\ 1 + c_{n2} * am\ 2 + ... + c_{nn} * am\ n$$

c) wherein the signal processing device (3) is integrated into the acceleration sensor module (8), in that there is provided a computer unit (3.12) and a memory unit (3.11),

d) wherein the memory unit (3.11) contains the factors (cij) and is freely programmable by a programming unit (7) and

e) the computer unit (3.12) converts the n acceleration signals (am 1, am 2) into n output signals (a(I), a(II) ... a(n)) in correspondence with the factors (cij) stored in the memory unit (3.11),

f) wherein the acceleration sensors (1, 2) are aligned in given preferred directions (1.Preferred, 2.Preferred) within the module (8) and specific actual alignments (1.Actual, 2.Actual) have a manufacturing-process-inherent angular tolerance with respect thereto

g) which is corrected by a first matrix {C1} of factors in that the acceleration signals (am 1, am 2) are converted into n output signals (a(I), a(II)) with the aid of the first matrix {C1},

**characterized in that**

h) in addition to the first matrix {C1}, the memory unit (3.11) is adapted to store a further matrix {C3} which is freely programmable by the programming unit (7) and in which there are stored factors corresponding to a reorientation (Preferred(new)) that deviates from the alignment (Preferred(old)) of the acceleration sensors (1, 2) in the module (8), and

i) the computer unit (3.12) is adapted to convert the acceleration signals (am 1, am 2) into n output signals (a (I), a(II)) by multiplication with the matrices.

**4.** A device in accordance with Claim 3, **characterized in that** the signal processing device (3) consists of

a) at least one analogue-digital converter for digitising the n acceleration signals (am 1, am 2),
b) a digital memory unit (3.11) in which the factors (cij) are stored in the form of digitised data and which has an interface (11) to the programming unit (7) and
c) a microprocessor for converting the digitised signals into the n digital output signals (a(I), a(II)).

**5.** A device in accordance with Claim 3, **characterized in that** the memory unit (3.11) consists of two storage areas, of which one storage area is freely programmable in non volatile manner and the other storage area is implemented in the form of one or more EEPROM units.


**Revendications**

**1.** Procédé pour faire fonctionner un module à capteurs (8) comportant

a) n capteurs (1, 2) sensibles à la direction, les capteurs (1, 2) étant orientés par rapport au module (8) dans n directions différentes et produisant chacun un signal de capteur (am 1, am 2),
b) par le fait qu'un dispositif (3) de préparation de signaux convertit ces n signaux des capteurs (am 1, am 2) au moyen d'une unité de calcul (3.12) en n signaux de sortie (a(I), a(II), ... a(n)), les signaux de sortie (a(I), a (II)) représentant des combinaisons linéaires des signaux de capteurs (am 1, am 2) avec des facteurs (cij) mémorisés dans une unité de mémoire (3.11) conformément à

$$a(I) = c_{11} * am\ 1 + c_{12} * am\ 2 + ... + c_{1n} * am\ n$$
$$a(II) = c_{21} * am\ 1 + c_{22} * am\ 2 + ... + c_{2n} * am\ n$$
$$\vdots \qquad \vdots \qquad\qquad\qquad\qquad\qquad\qquad \vdots$$
$$a(n) = c_{n1} * am\ 1 + c_{n2} * am\ 2 + ... + c_{nn} * am\ n$$

c) et les facteurs ($c_{ij}$) dans l'unité de mémoire (3.11) sont programmés au moyen d'une unité de programmation (7),
d) les capteurs (1, 2) sont orientés dans des directions de consigne (1.CONSIGNE, 2.CONSIGNE) à l'intérieur du module (8) et des orientations réelles effectives (1.REELLE, 2.REELLE) possèdent une tolérance angulaire conditionnée par la fabrication, par rapport aux orientations précédentes,
e) qui est corrigée par une première matrice {C1} par le fait que les signaux (am 1, am 2) des capteurs sont convertis sur la base de la première matrice {C1} en n signaux de sortie (a(I), a(II)),
**caractérisé en ce que**
f) en outre une orientation nouvelle (CONSIGNE(nouvelle)) qui diffère de l'orientation (CONSIGNE(ancienne)) des capteurs (1, 2) dans le module (8) est programmée par le fait qu'au moyen de l'unité de programmation (7)

f1) la première matrice {C1} est modifiée, ou
f2) en dehors de la première matrice {C1} il est prévu une autre matrice librement programmable {C3} conformément à la nouvelle orientation, et les signaux (am 1, am 2) des capteurs sont convertis en des signaux de sortie (a(I), a(II)) par multiplication avec les matrices.

**2.** Procédé pour la résolution, sélective du point de vue direction, d'une unité de sécurité passive dans un véhicule dans le cas d'un choc, **caractérisé en ce que** les signaux de sortie sont déterminés conformément à un procédé selon la revendication 1 et le dispositif (3) de préparation de signaux prépare des signaux de sortie pour le déclenchement du dispositif de sécurité passif.

**3.** Module d'enregistreur d'accélération

a) constitué par n(n≥2) capteurs d'accélération (1, 2), qui sont orientés respectivement sous un certain angle les uns par rapport aux autres et produisent n signaux d'accélération (am 1, am 2), et

b) un dispositif (3) de préparation de signaux qui convertit ces n signaux des capteurs (am 1, am 2) au moyen d'une unité de calcul (3.12) en n signaux de sortie (a(I), a(II), ... a(n)), les signaux de sortie (a(I), a(II)) représentant des combinaisons linéaires des signaux de capteurs (am 1, am 2) avec des facteurs (cij) mémorisés dans une unité de mémoire (3.11) conformément à

$$a(I) = c_{11} * am\ 1 + c_{12} * am\ 2 + ... + c_{1n} * am\ n$$
$$a(II) = c_{21} * am\ 1 + c_{22} * am\ 2 + ... + c_{2n} * am\ n$$
$$: \qquad : \qquad\qquad\qquad\qquad\qquad\qquad :$$
$$a(n) = c_{n1} * am\ 1 + c_{n2} * am\ 2 + ... + c_{nn} * am\ n$$

c) dans lequel le dispositif (8) de préparation de signaux est intégré dans le module (8) à capteurs d'accélération par le fait qu'il est prévu une unité de calcul (3.12) et une unité de mémoire (3.11),

d) dans lequel l'unité de mémoire (3.11) contient les capteurs ($c_{ij}$) et est librement programmable à partir d'une unité de programmation (7), et

e) l'unité de calcul (3.12) convertit les n signaux d'accélération (am 1, am 2) conformément aux facteurs ($c_{ij}$) mémorisés dans l'unité de mémoire (3.11) en n signaux de sortie (a(I), a(II), ... a(n)),

f) des capteurs d'accélération (1, 2) étant orientés dans des directions de consigne (1.CONSIGNE, 2.CONSIGNE) à l'intérieur du module (8) et des orientations réelles effectives (1.REELLE, 2.REELLE) possèdent une tolérance angulaire, conditionnée par la fabrication, par rapport aux orientations précédentes,

g) qui est corrigée par une première matrice {C1} par le fait que les signaux (am 1, am 2) des capteurs sont convertis sur la base de la première matrice {C1} en n signaux de sortie (a(I), a(II)),

**caractérisé en ce que**

h) l'unité de mémoire (3.11) est appropriée pour mémoriser en dehors de la première matrice {C1}, une autre matrice {C3} librement programmable par l'unité de programmation (7) et dans laquelle des facteurs sont mémorisés en fonction d'une orientation nouvelle (CONSIGNE(nouvelle)) qui diffère de l'orientation (CONSIGNE(ancienne)) des capteurs d'accélération (1, 2) dans le module (8),

i) l'unité de calcul (3.12) est appropriée pour convertir les signaux d'accélération (am 1, am 2) par multiplication pars matrices en n signaux de sortie (a(I), a(II)).

**4.** Dispositif selon la revendication 3, **caractérisé en ce que** le dispositif (3) de préparation de signaux est constitué par

a) au moins un convertisseur analogique / numérique pour numériser les n signaux d'accélération (am 1, am 2),

b) une unité de mémoire numérique (3.11) dans laquelle les facteurs (cij) sont mémorisés sous la forme de données numérisées et sont disponibles pour une interface (11) de liaison avec l'unité de programmation (7), et

c) un microprocesseur pour convertir les signaux numérisés en les n signaux de sortie numériques (a(I), a(II)).

**5.** Dispositif selon la revendication 3, **caractérisé en ce que** l'unité de mémoire (3.11) est constituée par deux zones de mémoire, dont l'une est librement programmable d'une manière non volatile et l'autre zone de mémoire est agencée sous la forme d'une ou de plusieurs unités EEPROM.

FIG.1

FIG.2a

$e(0)$

$Soll(0) \neq Ist(0)$

1

2

2 (ist)

2 (soll)

1(ist)

1(soll)

$\left\{ c_{ij} \right\}$

1(soll)neu

2(soll) neu

FIG.2b

1

2 (ist)

2

2 (soll) alt

1(ist)

$\triangle 1 \left\{ c_{ij} \right\}$

1(soll)alt

$e(1) = e(0)$

2

2 (ist)

$\left| e(2) \neq e(0) \right|$

2(soll)

1(ist)    1(soll)

1

$\triangle 2 \left\{ c_{ij} \right\}$

FIG.2c

Soll  Ist

1

4    4

2

{C1}

FIG.3a

1.Soll = 1.Ist

2.Soll

1    2

2.Ist

3

8

{C2}

FIG.3b

F    9

1.Soll(0)  2.Soll(0)

1    8

2

Soll(0)

3    1

8

3    F    2

{C3}

FIG.3c

$$\left\{ C3 \right\} = \left\{ \begin{matrix} 0 & 1 \\ -1 & 0 \end{matrix} \right\} \quad \begin{aligned} a(I) &= 0 \cdot am1 + 1 \cdot am2 \\ a(II) &= -1 \cdot am1 + 0 \cdot am2 \end{aligned}$$

$$\left\{ c \right\} = \left\{ C3 \right\} \cdot \left\{ C2 \right\} \cdot \left\{ C1 \right\}$$

FIG.3d